# EUROPÄISCHE PATENTSCHRIFT

(11) **EP 2 776 748 B1**
(45) Veröffentlichungstag und Bekanntmachung des Hinweises auf die Patenterteilung: **20.03.2019**
(21) Anmeldenummer: 12753454.3
(22) Anmeldetag: 21.08.2012
(51) Int. Cl.: F16K 31/06, F01M 1/16, F04C 2/344, F04C 14/22

(54) **VENTILVORRICHTUNG FÜR EINEN HYDRAULIKKREISLAUF SOWIE ÖLPUMPENREGELANORDNUNG**
VALVE DEVICE FOR A HYDRAULIC CIRCUIT, AND OIL-PUMP REGULATING ARRANGEMENT
DISPOSITIF À SOUPAPE POUR UN CIRCUIT HYDRAULIQUE AINSI QUE DISPOSITIF DE COMMANDE DE POMPE À HUILE

(30) Priorität: 11.11.2011 DE 102011055281
(43) Veröffentlichungstag der Anmeldung: 17.09.2014
(73) Patentinhaber: Pierburg GmbH, 41460 Neuss (DE)
(72) Erfinder: LAPPAN, Rolf, 50733 Köln (DE); BUSE, Werner, 41564 Kaarst (DE); SADOWSKI, Christoph, 44866 Bochum (DE); ROMANOWSKI, Lukas, 49090 Osnabrück (DE)
(74) Vertreter: Patentanwälte ter Smitten Eberlein-Van Hoof Rütten Partnerschaftsgesellschaft mbB
(86) Internationale Anmeldenummer: PCT/EP2012/066260
(87) Internationale Veröffentlichungsnummer: WO 2013/068142

(56) Entgegenhaltungen:
- CN-Y- 201 321 969
- JP-A- 62 248 812
- JP-A- 2009 222 035
- JP-A- 2011 122 651

## Beschreibung

Die Erfindung betrifft eine Ventilvorrichtung für einen Hydraulikkreislauf mit einer Aktoreinheit mit einem elektromagnetischen Kreis mit einem bewegbaren Anker, einem Kern, einer bestrombaren Spule und Flussleiteinrichtungen und einem Raum im Ventilinnern zwischen dem Anker und dem Kern und einer Ventileinheit mit einem Einlass, einem Auslass und einem Ventilschließkörper, der mit dem Anker verbunden ist und in Richtung eines Ventilsitzes federbelastet ist, wobei der Ventilsitz zwischen dem Einlass und dem Auslass angeordnet ist sowie eine Ölpumpenregelanordnung mit einer derartigen Ventilvorrichtung, einer variablen Ölpumpe mit einer Steuerkammer und einer Ölwanne.

Derartige Ventilvorrichtungen dienen zur Drucksteuerung hydraulischer Steller beispielsweise in Steuerungen für Automatikgetriebe oder zur Regelung des Druckes in einer Steuerkammer einer variablen Ölpumpe eines Ölkreislaufs zur Schmierung eines Verbrennungsmotors eines Kraftfahrzeugs. Dabei wird über den Druck in der Steuerkammer ein Ring einer Förderkammer, auf dem der Rotor einer Flügelzellen- oder Zahnradpumpe abrollt, verschoben oder verdreht, wodurch das Fördervolumen geändert wird.

Die zu diesen Zwecken verwendeten Druckregelventile bestehen beispielsweise aus einem Elektromagnetventil, welches mit einem seitlichen Anschluss mit einem Vorratsbehälter verbunden ist und dessen unterer Anschluss über eine Blende mit dem Auslass einer Hydraulikfluidquelle verbunden ist. Zwischen dem Ventil und der Fluidquelle befindet sich ein Druckanschluss eines zu regelnden Verbrauchers, wobei der Druck in Abhängigkeit der Stellung des Elektromagneten und somit des Ventilschließgliedes einstellbar ist.

Ein ähnliches Druckregelventil ist aus der EP 0451 272 A1 bekannt. Dieses Ventil weist einen seitlichen Druckanschluss und einen seitlichen Auslass zum Vorratsbehälter sowie einen unteren Regeldruckanschluss auf. Je nach Stellung des Ventilgliedes besteht ein unterschiedlich großer freier Querschnitt vom Druckanschluss zum Auslass oder zum Regeldruckanschluss, wodurch der Druck am Regeldruckanschluss eingestellt werden kann.

Auch die CN 201321969 Y offenbart ein Druckregelventil, welches zur Regelung eines Klimakompressors dient. Dieses weist einen Elektromagneten auf, dessen Anker am zum Ventilstößel entgegengesetzten Ende des Kerns angeordnet ist. Der Ventilstößel, der zwischen dem Einlass und dem auslass auf einen Ventilsitz absenkbar ist, wird über eine Feder vom Ventilsitz weggedrückt und durch Betätigung des Elektromagneten auf diesen abgesenkt. Zusätzlich weist das Ventil ein Bewegungsbegrenzungselement auf, welches von einer entgegengesetzten Richtung über einen Faltenbalg gegen den Ventilstößel verschiebbar ist.

Des Weiteren ist aus der DE 11 2008 000 978 T5 ein System zum Steuern des Drucks in zwei Steuerkammern einer Ölpumpe mit einem Elektromagnetventil und einem federbelasteten Schieberelement bekannt, bei dem abhängig vom Förderdruck und der Stellung des Elektromagnetventils der Differenzdruck zwischen den beiden Steuerkammern verändert wird. Zusätzlich weist dieses System ein Überdruckventil auf, über welches bei zu hohem Förderdruck das Öl von der Druckseite der Pumpe zur Saugseite zurückgeführt werden kann.

Diese bekannten Ventile und Systeme weisen den Nachteil auf, dass die Funktionen der Überdruckabschaltung und der Druckregelung in verschiedenen Bauteilen stattfinden und der freie durchströmbare Querschnitt und somit der Durchfluss am Ventil und die Geschwindigkeit und mögliche Druckverstellungsamplitude der Druckregelung relativ gering sind. Insbesondere besteht bei Druckregelventilen eine Abhängigkeit von der Größe des Überdrucks zur notwendigen Ankeröffnungskraft.

Es stellt sich daher die Aufgabe eine Ventilvorrichtung bereit zu stellen, bei der die Funktion des Überdrucköffnens und des Druckregelns in einer Ventilvorrichtung vereinigt wird, wobei die Ventilvorrichtung weitestgehend unabhängig vom geforderten Überdruck mit gleichen Stellkräften und somit Elektromagneten betrieben werden können soll, um zusätzliche Kosten zu vermeiden. Des Weiteren soll eine Ölpumpenregelanordnung geschaffen werden, welche wenige Bauteile benötigt und die kostengünstig herstellbar ist.

Diese Aufgaben werden durch eine Ventilvorrichtung mit den Merkmalen des Anspruchs 1 und eine Ölpumpenregelanordnung mit den Merkmalen des Anspruchs 13 gelöst.

Dadurch, dass bei Spannungsversorgung der Spule der Anker in Richtung des Kerns belastet ist, so dass der Ventilschließkörper vom Ventilsitz abgehoben und eine Verbindung zwischen Einlass und Auslass hergestellt wird, wobei der Einlass zwischen dem Auslass und dem Raum im Ventilinnern angeordnet ist und am zum Raum entgegen gesetzten Ende der Ventileinheit eine Öffnung ausgebildet ist, in der ein druckbelasteter Ventilstößel angeordnet ist, der In Öffnungsrichtung gegen den Ventilschließkörper verschiebbar ist, wird eine Ventilvorrichtung geschaffen, bei der über den Ventilstößel der obere Ventilsitz zur Regelung betätigt und somit ein Überdruck im Fluidkreislauf zusätzlich zur stufenlosen Regelung über die Magnetkraft reduziert werden kann. Dabei ist der Schaltpunkt des Überdruckventils unabhängig vom Durchströmungsquerschnitt bei geöffnetem Ventil. Des Weiteren ist die Betätigungskraft des Elektromagneten unabhängig vom Querschnitt des Ventilstößels und somit vom gewählten Überdruck.

Dadurch, dass bei einer erfindungsgemäßen Ölpumpenregelanordnung eine derartige Ventilvorrichtung verwendet wird und der verschiebbare Ventilstößel mit dem Förderdruck der variablen Ölpumpe beaufschlagt ist, kann der Überdruckschaltpunkt einer Ölpumpe unabhängig vom verwendeten Elektromagneten je nach Anwendung über den Durchmesser geändert werden. Die Ölpumpe kann über die Magnetkraft stufenlos geregelt und ein Überdruck im System vermieden werden.

Vorzugsweise weist der Raum im Ventilinnern zum Auslass eine fluidische Verbindung auf, wobei eine Kraftangriffsfläche am Ventilschließkörper, an der der Druck am Auslass angreift einer entgegen gesetzten resultierenden Kraftangriffsfläche am Anker, an der der Druck im Raum im Ventilinneren angreift, entspricht. So wird ein kraftausgeglichenes Ventil geschaffen, welches unabhängig vom Systemdruck mit gleichen Betätigungskräften geöffnet werden kann.

In einer weiteren vorteilhaften Ausführung ist der Anker einstückig mit dem Ventilschließkörper ausgebildet, wodurch die Anzahl der Bauteile reduziert und eine Betätigung des Ventilschließkörpers gemeinsam mit dem Anker sichergestellt wird.

Der Anker und der Ventilschließkörper weisen eine Längsbohrung auf, über die die fluidische Verbindung zwischen dem Raum im Ventilinneren und dem Auslass besteht. Auf diese Weise kann der Druckausgleich am Anker beziehungsweise am Ventilschließkörper besonders einfach hergestellt werden.

In einer bevorzugten Ausführung ist der Ventilstößel einstückig mit dem Ventilschließkörper ausgebildet. Dies vereinfacht die Montage durch Reduzierung der Bauteileanzahl des Ventils.

Dabei ist es vorteilhaft, wenn zwischen Ventilstößel und Ventilschließkörper eine Öffnung ausgebildet ist, über die die Längsbohrung mit dem Auslass fluidisch verbunden ist, so dass weiterhin auf einfache Weise der Druckausgleich sichergestellt werden kann, wodurch jeder Betätigungskraft ein fester Öffnungsquerschnitt zugeordnet werden kann und somit eine Hubverstellung ermöglicht wird, welche unabhängig vom Druck am Einlass ist.

In einer alternativen vorteilhaften Ausgestaltung der Erfindung ist der Ventilstößel als separates Bauteil in der Ventileinheit gelagert. Hierdurch kann der freigebbare Querschnitt der Ventilvorrichtung zwischen Einlass und Auslass deutlich vergrößert werden. Die Ausbildung zusätzlicher Querbohrungen entfällt.

Es ist des Weiteren vorteilhaft, wenn der Ventilstößel in einer Buchse geführt ist, welche in der Öffnung der Ventileinheit befestigt Ist, da Reibungskräfte vermieden werden und der Einbau des Stößels vereinfacht wird.

Vorzugsweise weist der Ventilstößel an seinem zur druckbelasteten Fläche entgegen gesetzten Ende eine Erweiterung auf, die im entlasteten Zustand axial gegen die Buchse anliegt, wodurch der Ventilstößel gegen herausfallen gesichert ist.

Eine besonders gute Abdichtung im geschlossenen Zustand des Ventils ergibt sich, wenn der Ventilsitz in einem Gehäuse der Ventileinheit kegelstumpfförmig ausgebildet ist und der Ventilschließkörper zylindrisch ausgebildet ist.

Eine Verringerung der Betätigungskräfte durch Reibungsreduzierung ergibt sich, wenn der Anker in einer Buchse gleitet, die im Gehäuse der Ventileinheit angeordnet ist.

Vorzugsweise weist der Kern einen radial äußeren Teil auf, in dem ein Gewinde ausgebildet ist, in welchem ein radial innerer Teil des Kerns über das Gewinde verdrehbar und somit axial verschiebbar angeordnet ist. So kann der Verlauf der magnetischen Feldlinien geändert werden.

In einer bevorzugten Weiterbildung der Ölpumpenregelanordnung ist der Einlass der Ventileinheit fluidisch mit der Steuerkammer der variablen Ölpumpe und über eine Blende mit einer Förderleitung der Ölpumpe verbunden. Vorzugsweise ist der Auslass der Ventileinheit mit der Ölwanne fluidisch verbunden. Durch diese Verschaltung ergibt sich eine gute Regelbarkeit eines Drucks in der Steuerkammer einer variablen Ölpumpe, über welchen die Förderleistung der Ölpumpe durch Verschieben oder Verdrehen eines äußeren Verstellringes eingestellt werden kann.

Es wird somit eine Ventilvorrichtung geschaffen, welche die Funktionen eines Überdruckventils und eines Druckregelventils in sich vereinigt und dennoch unabhängig vom gewünschten einzustellenden Überdruck mit gleich bleibender Magnetkraft betätigt werden kann. Dabei ist durch große Durchströmungsquerschnitte eine sehr schnelle Regelung möglich. Eine Änderung des Druckregelbereiches kann durch Änderung der Federkennlinie vorgenommen werden. Entsprechend kann eine Ölpumpenregelung mit schneller Anpassung der zu fördernden Ölmenge vorgenommen werden, bei der zusätzlich eine fail-safe Funktion vorhanden ist.

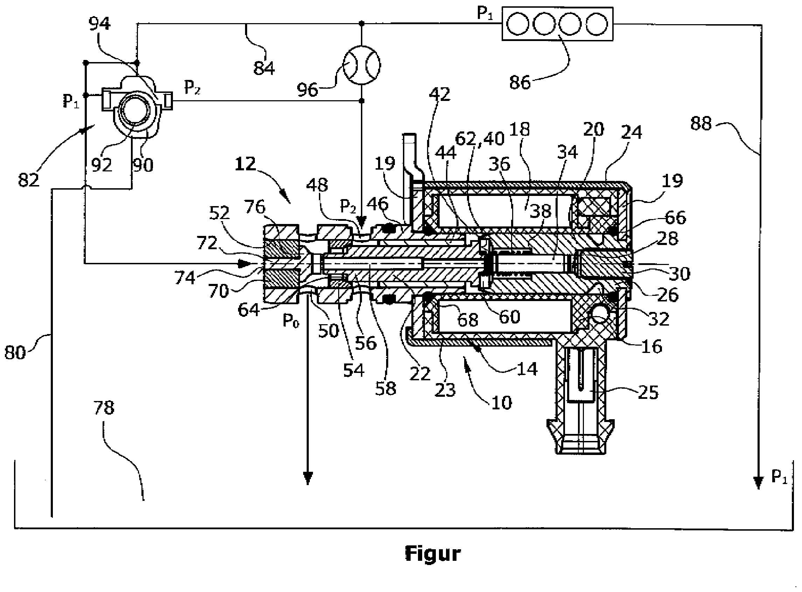

Ein Ausführungsbeispiel einer erfindungsgemäßen Ventilvorrichtung und der zugehörigen Ölpumpenregelanordnung ist in der Figur dargestellt und wird nachfolgend beschrieben.

Die Figur zeigt eine Seitenansicht einer erfindungsgemäßen Ventilvorrichtung in geschnittener Darstellung mit schematisch dargestellter Anbindung an einen Ölkreislauf einer Verbrennungskraftmaschine.

Die erfindungsgemäße in der Figur dargestellte Ventilvorrichtung besteht aus einer Aktoreinheit 10, an der eine Ventileinheit 12 befestigt ist. Die Aktoreinheit 10 weist einen elektromagnetischen Kreis 14 auf, welcher aus einer auf einen Spulenträger 16 gewickelten Spule 18, einem Kern 20 im Innern des Spulenträgers 16, einem axial verschiebbaren Anker 22 und den elektromagnetischen Kreis 14 vervollständigende Flussleiteinrichtungen besteht, welche axial oberhalb und unterhalb der Spule 18 in Form von Rückschlussblechen 19 angeordnet sind und in Form eines Joches 24 den Kern 20 beziehungsweise den Anker 22 radial umgeben. Die Spule 18 ist von einem Kunststoffmantel 23 umgeben, der auch einen Stecker 25 zur elektrischen Versorgung der Spule 18 aufweist.

Der Kern 20 weist einen fest im Spulenträger 16 angeordneten radial äußeren Teil 26 auf, in dem eine Durchgangsbohrung 28 ausgebildet ist, welche teilweise mit einem Innengewinde ausgestattet ist, in welches ein radial innerer Teil 30 mit einem Außengewinde in Form einer Madenschraube geschraubt ist. Je nach axialer Stellung dieser Schraube 30 im Kern 20 ist eine Feinjustierung der magnetischen Feldlinien möglich. Axial in Höhe der Schraube 30 weist der Kern 20 eine umlaufende Aussparung 32 auf, die eine Streuung der Magnetfeldlinien im Kern 20 verhindert und so die Feinjustierung über die Schraube 30 verbessert.

Des Weiteren ist in der Durchgangsbohrung 28 an der zur Ventileinheit 12 gewandten Seite der Durchgangsbohrung 28 ein Zapfen 34 befestigt, der zur Führung einer Schraubenfeder 36 dient, welche den Zapfen 34 umgibt und zwischen einer Anlagefläche 38 im Kern 20 und einer Anlagefläche 40 am Anker 22 eingespannt ist. Der Zapfen 34 dient gleichzeitig als Anschlag zur Begrenzung der Ankerbewegung.

Bei Bestromung der Spule 18 entsteht in bekannter Weise eine magnetische Anziehungskraft zwischen dem Anker 22 und dem Kern 20, der zur Bündelung der axial verlaufenden magnetischen Feldlinien einen ringförmigen spitz zulaufenden Vorsprung 42 aufweist, in dessen Inneres der Anker 22 bei Bestromung der Spule 18 eintaucht.

Der Anker 22 ist in einer Buchse 44 geführt, welche in einem Gehäuse 46 der Ventileinheit 12 angeordnet ist, in der ein radialer Einlass 48 ein radialer Auslass 50 sowie eine am zum Anker 22 entgegen gesetzten Ende angeordnete axiale Öffnung 52 ausgebildet sind.

Zwischen dem Einlass 48 und dem Auslass 50, welcher zwischen dem Einlass 48 und der Öffnung 52 angeordnet ist, ist im Gehäuse 46 ein kegelstumpfförmiger Ventilsitz 54 ausgebildet, welcher mit einem zylindrischen Ventilschließkörper 56 zusammenwirkt, der einstückig mit dem Anker 22 ausgebildet ist. Im Anker 22 und Ventilschließkörper 56 ist eine Längsbohrung 58 ausgebildet, über die ein Raum 60 im Ventilinneren, in dem die Feder 36 angeordnet ist, mit dem Auslass 50 des Ventils in ständiger Verbindung steht. Entsprechend ist der Druck, welcher am Ventilschließkörper 56 in Öffnungsrichtung wirkt der gleiche Druck der am Anker 22 in Schließrichtung des Ventils wirkt. Da zusätzlich die beiden Kraftangriffsflächen 62, 64 am Anker 22 beziehungsweise am Ventilschließkörper 56 gleich groß sind besteht ein Kraftausgleich an der bewegbaren Anker 22 - Ventilschließkörper 56 -Einheit, der dazu führt, dass lediglich die elektromagnetische Kraft und die Federkraft auf diese Einheit 22, 56 wirken.

Der Raum 60 wird über zwei O-Ringe 66, 68, welche radial innerhalb des Spulenträgers 16 zwischen Spulenträger 16 und Kern 20 beziehungsweise zwischen Spulenträger 16 und Gehäuse 46 der Ventileinheit 12 angeordnet sind, abgedichtet.

Des Weiteren ist in der Öffnung 52 des Gehäuses 46 eine weitere Buchse 70 angeordnet, in der ein Ventilstößel 72 gleitend gelagert ist, welcher in vorliegendem Ausführungsbeispiel als separates Bauteil ausgebildet ist, jedoch auch einstückig mit dem Ventilschließkörper 64 ausgebildet werden könnte. Die Buchse 70 weist je nach gewünschter Öffnungskraft eine unterschiedlich große Öffnung auf, so dass eine druckbelastete Fläche 74 des Ventilstößels 72 eine entsprechend unterschiedliche Größe aufweisen kann. Je größer diese Fläche 74 ist desto größer ist die Kraft, die bei gleichem Druck auf den Ventilstößel 72 wirkt, welcher dadurch in Richtung des Ventilschließkörpers 64 verschoben wird und diesen gegebenenfalls vom Ventilsitz 54 abhebt. An seinem zur druckbelasteten Fläche 74 entgegen gesetztem Ende weist der Ventilstößel 72 eine Erweiterung 76 auf, mit der er im unbelasteten Zustand gegen die Buchse 70 anliegt und die sich axial bis unmittelbar an den Ventilschließkörper 64 anliegend erstreckt.

Die Funktion dieser Ventilvorrichtung als Ölpumpenregelung wird im Folgenden anhand des Ölkreislaufs einer Verbrennungskraftmaschine erklärt.

Der Ölkreislauf besteht aus einer Ölwanne 78 aus der über eine Saugleitung 80 mittels einer variablen Ölpumpe 82 Öl angesaugt wird. Dieses Öl strömt über eine Förderleitung 84 zum Zweck der Schmierung zu einem Verbrennungsmotor 86 und von diesem über eine Rückführleitung 88 zurück zur Ölwanne 78.

Wie erwähnt handelt es sich nicht um eine Ölpumpe 82, welche ständig eine gleiche Fördermenge fördert sondern um eine Pumpe, welche mittels Verstellung eines Exzenterringes 90, in dem ein Pumpenrotor 92 zur Förderung exzentrisch gedreht wird, in der Fördermenge und somit im Förderdruck p₁ einstellbar ist.

Die Verstellung des Exzenterringes 90 erfolgt durch Regelung eines Steuerdruckes p₂ in einer Steuerkammer 94 der Ölpumpe 82. Der in der Steuerkammer 94 wirkende Steuerdruck p₂ wird mittels der Ventilvorrichtung geregelt, indem der Einlass 48 der Ventilvorrichtung über eine Düse oder Blende 96 mit der Förderleitung 84 und mit der Steuerkammer 94 verbunden wird, so dass hinter der Blende 96 am Einlass 48 des Ventils und in der Steuerkammer 94 immer der gleiche Druck p₂ herrscht. An der entgegengesetzten Seite des Exzenterringes 90 wirkt jeweils der Förderdruck p₁ der Ölpumpe 82. Der Auslass 50 des Ventils wird mit der Ölwanne 78 verbunden. Des Weiteren wird die druckbelastete Fläche 74 des Ventilstößels 72 mit dem Förderdruck p₁ beaufschlagt.

Im nicht bestromten Zustand des Ventils wird der Anker 22 und somit der Ventilschließkörper 56 aufgrund der Federkraft auf den Ventilsitz 54 gedrückt. Entsprechend besteht keine Verbindung zwischen dem Einlass 48 und dem Auslass 50. Somit besteht ein maximaler Steuerdruck p₂ der in der Steuerkammer anliegt und dafür sorgt, dass sich der Exzenterring 90 in seiner Maximalstellung befindet und somit auch der Förderdruck p₁ maximal ist.

Neben der Federkraft wirkt auf den Anker 22 über den Ventilstößel 72 auch die Kraft, die sich aus dem Förderdruck p₁ und der von diesem beaufschlagten druckbelasteten Fläche 74 ergibt. Ist diese Kraft geringer als die Federkraft wird weiterhin Öl mit dem Maximaldruck p₁ gefördert. Übersteigt diese Kraft jedoch die Federkraft wird der Ventilschließkörper 56 durch den Ventilstößel 72 vom Ventilsitz 54 gehoben, so dass eine Verbindung vom Einlass 48 zum Auslass 50 hergestellt wird, was zu einer Verringerung des Steuerdruckes p₂ und somit im Folgenden durch Verschiebung des Exzenterringes 90 zu einer Verringerung des Förderdrucks p₁ führt. Somit kann auf einfache Weise über die Fläche, an der der Förderdruck angreift ein Maximaldruck im System eingestellt werden. Gleichzeitig wird eine fail-safe Funktion bei Ausfall der Aktoreinheit 10 zur Verfügung gestellt.

Ist eine Reduzierung des Förderdrucks p₁ gewünscht, wird über die Steuerung die Spule 18 mit Spannung versorgt. Dies führt dazu, dass der Anker 22 in Richtung des Kerns 20 gezogen wird, so dass der Ventilschließkörper 56 vom Ventilsitz 54 abgehoben wird und eine Verbindung zwischen Einlass 48 und Auslass 50 hergestellt wird, was wiederum zu einer Reduzierung des Steuerdrucks p₂ in der Steuerkammer 94 und somit zu einer Reduzierung des Förderdruckes p₁ führt. Der Öffnungsquerschnitt ist dabei abhängig von der Stromversorgung der Spule 18, so dass mit steigendem Strom auch der freigegebene Querschnitt steigt und somit der Förderdruck p₁ fällt.

Tritt ein Drehzahlsprung der Pumpe 82 beispielsweise aufgrund einer plötzlichen Laststeigerung des Verbrennungsmotors 86 auf, erhöht sich kurzzeitig der Förderdruck p₁, was dazu führt, dass der Ventilstößel 72 gegen den Ventilschließkörper 56 gedrückt wird, wodurch wiederum die fluidische Verbindung zwischen Einlass 48 und Auslass 50 hergestellt wird. Dies erfolgt in einem sehr kurzen Zeitraum, da die durchströmbare Querschnittsfläche in diesem Ventil sehr groß gewählt werden kann. Hierdurch sinkt der Steuerdruck p₂ und somit der Förderdruck p₁ bis sich erneut der zur Bestromung des Elektromagneten passende Förderdruck p₁ einstellt.

Daraus folgt, dass jeder Bestromung und somit Magnetkraft ein Förderdruck zugeordnet werden kann. Die aufzubringende Öffnungskraft ist entsprechend lediglich von der Federkraft abhängig und unabhängig vom Steuerdruck. Eine Regelung der Überdruck-Abschaltkraft kann auf einfache Weise über die druckbelastete Fläche des Druckstößels erfolgen, eine Änderung des Regeldruckes durch Änderung der Federkraftkennlinie. Somit können immer gleiche Spulen für verschiedene Druckregel- und Überdruckbereiche eingesetzt werden, was zu einer Verringerung der Herstellkosten führt.

Es sollte deutlich sein, dass sich diese Ventilvorrichtungen auch für andere Hydraulikkreisläufe eignen. Konstruktive Änderungen der Ventilvorrichtung im Vergleich zum dargestellten Ausführungsbeispiel, wie beispielsweise die einstückige Ausbildung von Anker Ventilschließkörper und Ventilstößel oder auch eine unterschiedliche Aufteilung der Gehäuse und ähnliches sind ebenfalls denkbar, ohne den Schutzbereich des Hauptanspruchs zu verlassen.

## Patentansprüche

1. Ventilvorrichtung für einen Hydraulikkreislauf mit einer Aktoreinheit (10) mit einem elektromagnetischen Kreis (14) mit einem bewegbaren Anker (22), einem Kern (20), einer bestrombaren Spule (18) und Flussleiteinrichtungen (19, 24) und einem Raum (60) im Ventilinnern zwischen dem Anker (22) und dem Kern (20)
und einer Ventileinheit (12) mit einem Einlass (48), einem Auslass (50) und einem Ventilschließkörper (56), der mit dem Anker (22) verbunden ist und in Richtung eines Ventilsitzes (54) federbelastet ist,
wobei der Ventilsitz (54) zwischen dem Einlass (48) und dem Auslass (50) angeordnet ist,
**dadurch gekennzeichnet, dass**
bei Spannungsversorgung der Spule (18) der Anker (22) in Richtung des Kerns (20) belastet ist, so dass der Ventilschließkörper (56) vom Ventilsitz (54) abgehoben und eine Verbindung zwischen Einlass (48) und Auslass (50) hergestellt wird, wobei der Einlass (48) zwischen dem Auslass (50) und dem Raum (60) im Ventilinnern angeordnet ist und am zum Raum (60) entgegen gesetzten Ende der Ventileinheit (12) eine Öffnung (52) ausgebildet ist, in der ein druckbelasteter Ventilstößel (72) angeordnet ist, der in Öffnungsrichtung gegen den Ventilschließkörper (56) verschiebbar ist.

2. Ventilvorrichtung für einen Hydraulikkreislauf nach Anspruch 1,
**dadurch gekennzeichnet, dass**
der Raum (60) im Ventilinnern zum Auslass (50) eine fluidische Verbindung aufweist, wobei eine Kraftangriffsfläche (64) am Ventilschließkörper (56), an der der Druck am Auslass (50) angreift einer entgegen gesetzten resultierenden Kraftangriffsfläche (62) am Anker (22), an der der Druck im Raum (60) im Ventilinneren angreift, entspricht.

3. Ventilvorrichtung für einen Hydraulikkreislauf nach Anspruch 1 oder 2,
**dadurch gekennzeichnet, dass**
der Anker (22) einstückig mit dem Ventilschließkörper (56) ausgebildet ist.

4. Ventilvorrichtung für einen Hydraulikkreislauf nach Anspruch 3,
**dadurch gekennzeichnet, dass**
der Anker (22) und der Ventilschließkörper (56) eine Längsbohrung (58) aufweisen, über die die fluidische Verbindung zwischen dem Raum im Ventilinneren und dem Auslass besteht.

5. Ventilvorrichtung für einen Hydraulikkreislauf nach einem der vorhergehenden Ansprüche,
**dadurch gekennzeichnet, dass**
der Ventilstößel (72) einstückig mit dem Ventilschließkörper (56) ausgebildet ist.

6. Ventilvorrichtung für einen Hydraulikkreislauf nach Anspruch 5,
**dadurch gekennzeichnet, dass**
zwischen dem Ventilstößel (72) und dem Ventilschließkörper (56) eine Öffnung ausgebildet ist, über die die Längsbohrung (58) mit dem Auslass (50) fluidisch verbunden ist.

7. Ventilvorrichtung für einen Hydraulikkreislauf nach einem der Ansprüche 1 bis 4,
**dadurch gekennzeichnet, dass**
der Ventilstößel (72) als separates Bauteil in der Ventileinheit (12) gelagert ist.

8. Ventilvorrichtung für einen Hydraulikkreislauf nach einem der vorhergehenden Ansprüche,
**dadurch gekennzeichnet, dass**
der Ventilstößel (72) in einer Buchse (70) geführt ist, welche in der Öffnung (52) der Ventileinheit (12) befestigt ist.

9. Ventilvorrichtung für einen Hydraulikkreislauf nach Anspruch 7 oder 8,
**dadurch gekennzeichnet, dass**
der Ventilstößel (72) an seinem zur druckbelasteten Fläche (74) entgegen gesetzten Ende eine Erweiterung (76) aufweist, die im entlasteten Zustand axial gegen die Buchse (70) anliegt.

10. Ventilvorrichtung für einen Hydraulikkreislauf nach einem der vorhergehenden Ansprüche,
**dadurch gekennzeichnet, dass**
der Ventilsitz (54) in einem Gehäuse (46) der Ventileinheit (12) kegelstumpfförmig ausgebildet ist und der Ventilschließkörper (56) zylindrisch ausgebildet ist.

11. Ventilvorrichtung für einen Hydraulikkreislauf nach einem der vorhergehenden Ansprüche,
**dadurch gekennzeichnet, dass**
der Anker (22) in einer Buchse (44) gleitet, die im Gehäuse (46) der Ventileinheit (12) angeordnet ist.

12. Ventilvorrichtung für einen Hydraulikkreislauf nach einem der vorhergehenden Ansprüche,
**dadurch gekennzeichnet, dass**
der Kern (20) einen radial äußeren Teil (26) aufweist, In dem ein Gewinde ausgebildet ist, in welchem ein radial innerer Teil (30) des Kerns (20) über das Gewinde verschiebbar angeordnet ist.

13. Ölpumpenregelanordnung mit einer Ventilvorrichtung nach einem der vorhergehenden Ansprüche, einer variablen Ölpumpe (82) mit einer Steuerkammer (94) und einer Ölwanne (78),
**dadurch gekennzeichnet, dass**
der verschiebbare Ventilstößel (72) mit dem Förderdruck der variablen Ölpumpe (82) beaufschlagt ist.

14. Ölpumpenregelanordnung nach Anspruch 13,
**dadurch gekennzeichnet, dass**
der Einlass (48) der Ventileinheit (12) fluidisch mit der Steuerkammer (94) der variablen Ölpumpe (82) und über eine Blende (96) mit einer Förderleitung (84) der Ölpumpe (82) verbunden ist.

15. Ölpumpenregelanordnung nach einem der Ansprüche 13 oder 14,
**dadurch gekennzeichnet, dass**
der Auslass (50) der Ventileinheit (12) mit der Ölwanne (78) fluidisch verbunden ist.

## Claims

1. A valve device for a hydraulic circuit, comprising
an actuator unit (10) including an electromagnetic circuit (14) having a movable armature (22), a core (20), a coil (18) which can be supplied with current and flux guiding means (19, 24) and a space (60) in the valve interior between the armature (22) and the core (20),
and a valve unit (12) including an inlet (48), an outlet (50) and a valve closing body (56) which is connected with the armature (22) and is springloaded towards a valve seat (54),
wherein said valve seat (54) is arranged between said inlet (48) and said outlet (50),
**characterized in that**
said inlet (48) is arranged between said outlet (50) and said space (60) in said valve interior and an opening (52) is defined at the end of said valve unit (12) opposite said space (60), in which opening a pressure-loaded valve tappet (72) is arranged which is adapted to be displaced against said valve closing body (56) in the opening direction.

2. The valve device for a hydraulic circuit according to claim 1,
**characterized in that**
the space (60) in the valve interior is in fluid communication with the outlet (50), wherein a force application surface (64) at the valve closing body (56) upon which the pressure at the outlet (50) acts corresponds to an opposite resulting force application surface (62) at the armature (22) upon which the pressure in said space (60) in the valve interior acts.

3. The valve device for a hydraulic circuit according to claim 1 or 2,
**characterized in that**
the armature (22) is formed integrally with the valve closing body (56).

4. The valve device for a hydraulic circuit according to claim 3,
**characterized in that**
the armature (22) and the valve closing body (56) comprise a longitudinal bore (58) via which the fluid communication between the space in the valve interior and the outlet exists.

5. The valve device for a hydraulic circuit according to any one of the preceding claims,
**characterized in that**
the valve tappet (72) is formed integrally with the valve closing body (56).

6. The valve device for a hydraulic circuit according to claim 5,
**characterized in that**
between the valve tappet (72) and the valve closing body (56) an opening is defined via which the longitudinal bore (58) is in fluid communication with the outlet (50).

7. The valve device for a hydraulic circuit according to any one of claims 1 to 4,
**characterized in that**
the valve tappet (72) is supported as a separate component in the valve unit (12).

8. The valve device for a hydraulic circuit according to any one of the preceding claims,
**characterized in that**
the valve tappet (72) is guided in a bushing (70) which is fastened in the opening (52) of the valve unit (12).

9. The valve device for a hydraulic circuit according to claim 7 or 8,
**characterized in that**
the valve tappet (72) comprises an extended portion (76) at its end opposite the pressure-loaded surface (74), said extended portion, in its pressure-relieved condition, axially bearing upon the bushing (70).

10. The valve device for a hydraulic circuit according to any one of the preceding claims,
**characterized in that**
the valve seat (54) is of frustoconical configuration in a housing (46) of the valve unit (12) and the valve closing body (56) is of cylindrical configuration.

11. The valve device for a hydraulic circuit according to any one of the preceding claims,
**characterized in that**
the armature (22) slides in a bushing (44) which is arranged in the housing (46) of the valve unit (12).

12. The valve device for a hydraulic circuit according to any one of the preceding claims,
**characterized in that**
the core (20) comprises a radially outer portion (26) in which a thread is formed in which a radially inner portion (30) of the core (20) is arranged such that it is displaceable via the thread.

13. An oil pump regulating arrangement comprising a valve device according to any one of the preceding claims, a variable oil pump (82) including a control chamber (94) and an oil sump (78),
**characterized in that**
the feed pressure of the variable oil pump (82) is applied to the displaceable valve tappet (72).

14. The oil pump regulating arrangement according to claim 13,
**characterized in that**
the inlet (48) of the valve unit (12) is in fluid communication with the control chamber (94) of the variable oil pump (82) and is connected with a feed line (84) of the oil pump (82) via an orifice (96).

15. The oil pump regulating arrangement according to one of claims 13 or 14,
**characterized in that**
the outlet (50) of the valve unit (12) is in fluid communication with the oil sump (78).

## Revendications

1. Dispositif à soupape pour circuit hydraulique, comprenant
une unité d'actionneur (10) avec un circuit électromagnétique (14) avec un armature (22), un noyau (20), une bobine (18) apte à être alimentée en courant et moyens conducteurs de flux (19, 24) et une chambre (60) à l'intérieur de la soupape entre l'armature (22) et le noyau (30),
et une unité de soupape (12) avec une entrée (48), une sortie (50) et un corps de fermeture de soupape (56) relié à l'armature (22) et sollicité par ressort vers un siège de soupape (54),
le siège de soupape étant disposé entre l'entrée (48) et la sortie (50),
**caractérisé en ce que**
lors de l'alimentation de la bobine (18) en courant, l'armature (22) est sollicitée vers le noyau (20), de sorte que le corps de fermeture de soupape (56) soit relevé du siège de soupape (54) et une liaison est établi entre l'entrée (48) et la sortie (50), l'entrée (48) étant disposée entre la sortie (50) et la chambre (60) dans l'intérieur de la soupape, et une ouverture (52) étant formée à l'extrémité opposée à la chambre (50), dans laquelle ouverture un poussoir (72) sollicité par pression est disposé, qui est déplaçable dans la direction d'ouverture à l'encontre du corps de fermeture de soupape (56).

2. Dispositif à soupape pour circuit hydraulique selon la revendication 1, **caractérisé en ce que** la chambre (60) dans l'intérieur de la soupape est en communication fluidique avec la sortie (50), une surface d'application de la force (64) au corps de fermeture de soupape (56), à laquelle la pression s'applique à la sortie (50), correspond à une surface d'application de la force (62) résultante opposée à l'armature (22), à laquelle s'applique la pression dans la chambre (60) dans l'intérieur de la soupape.

3. Dispositif à soupape pour circuit hydraulique selon la revendication 1 ou 2, **caractérisé en ce que** l'armature (22) est formée de manière intégrale avec le corps de fermeture de soupape (56).

4. Dispositif à soupape pour circuit hydraulique selon la revendication 3, **caractérisé en ce que** l'armature (22) et le corps de fermeture de soupape (56) comprennent un alésage longitudinal (58) à travers lequel la chambre dans l'intérieur de la soupape est en communication fluidique avec la sortie.

5. Dispositif à soupape pour circuit hydraulique selon l'une quelconque des revendications précédentes, **caractérisé en ce que** le poussoir (72) est formé de manière intégrale avec le corps de fermeture de soupape (56).

6. Dispositif à soupape pour circuit hydraulique selon la revendication 5, **caractérisé en ce qu'**une ouverture est formée entre le poussoir (72) et le corps de fermeture de soupape (56), à travers laquelle l'alésage longitudinal (58) est en communication fluidique avec la sortie (50).

7. Dispositif à soupape pour circuit hydraulique selon l'une quelconque des revendications 1 à 4, **caractérisé en ce que** le poussoir (72) est supporté dans l'unité de soupape (12) comme composant séparé.

8. Dispositif à soupape pour circuit hydraulique selon l'une quelconque des revendications précédentes, **caractérisé en ce que** le poussoir (72) est guidé dans une douille (70) fixée dans l'ouverture (52) de l'unité de soupape (12).

9. Dispositif à soupape pour circuit hydraulique selon la revendication 7 ou 8, **caractérisé en ce que** le poussoir (72) comprend un élargissement (76) à son extrémité opposée à sa surface (74) sollicitée par pression, l'élargissement repose axialement sur la douille (70) dans l'état relâché.

10. Dispositif à soupape pour circuit hydraulique selon l'une quelconque des revendications précédentes, **caractérisé en ce que** le siège de soupape (54) présent une forme tronconique dans un carter (46) de l'unité de soupape (12) et le corps de fermeture de soupape (56) est cylindrique.

11. Dispositif à soupape pour circuit hydraulique selon l'une quelconque des revendications précédentes, **caractérisé en ce que** l'armature (22) glisse dans une douille (44) disposée dans le carter (46) de l'unité de soupape (12).

12. Dispositif à soupape pour circuit hydraulique selon l'une quelconque des revendications précédentes, **caractérisé en ce que** le noyau (20) a une partie (26) radialement extérieure dans laquelle un taraudage est formé, dans lequel une partie radialement intérieure (30) du noyau (20) est disposée de manière déplaçable par moyen du taraudage.

13. Dispositif de commande de pompe à huile avec un dispositif de soupape selon l'une quelconque des revendications précédentes, une pompe à huile (82) variable avec une chambre de commande (94) et un carter d'huile (78), **caractérisé en ce que** le poussoir (72) déplaçable est soumis à la pression de refoulement de la pompe à huile (82) variable.

14. Dispositif de commande de pompe à huile selon la revendication 13, **caractérisé en ce que** l'entrée (48) de l'unité de soupape (12) est en communication fluidique avec la chambre de commande (94) de la pompe à huile (82) variable et, par une orifice (96), avec un conduit de refoulement (84) de la pompe à huile (82).

15. Dispositif de commande de pompe à huile selon la revendication 13 ou 14, **caractérisé en ce que** la sortie (50) de l'unité de soupape (12) est en communication fluidique avec le carter d'huile (78).
